# EUROPEAN PATENT APPLICATION

(11) **EP 4 300 919 A1**
(43) Date of publication of application: **03.01.2024**
(21) Application number: 22181880.0
(22) Date of filing: 29.06.2022
(51) Int. Cl.: H04L 67/12, H04L 69/08, H04L 69/00, H04L 69/18

(54) **A CONTROLLER FOR COMMUNICATING WITH A PLURALITY OF INDUSTRIAL IOT DEVICES**

(71) Applicant: Siemens Aktiengesellschaft, 80333 München (DE)
(72) Inventor: Herz, Torsten, 91090 Effeltrich (DE); Lindeholz, Tobias, 91058 Erlangen (DE)
(74) Representative: Siemens Patent Attorneys

(57) **Abstract**

The current disclosure describes a controller configured to communicate with a with a plurality of industrial IOT devices. The controller comprises two or more plugins configured to communicate with the plurality of industrial IOT devices, and a communication manager for coordinating with the two or more plugins. Each plugin is configured to receive one or more messages from a corresponding industrial IOT device in a corresponding protocol and extract data from the one or more messages by unwrapping the corresponding protocol associated with the one or more messages. The communication manager is configured to obtain the extracted data from the plugins.

## Description

### Background:

With the advent of internet of things, classic factory environments are currently undergoing a major upheaval. New IoT devices connect classical OT devices with IT environment, resulting in the disappearance of the boundaries of the classic automation pyramid. This allows for optimization of the production process, enabling more efficient and precise operation. However, this requires the seamless interaction of traditional automation components (such as machine tool controls, PLCs, HMIs, production control system (MES)) with new IoT devices. However, this is challenging especially in the context of communication, where a plurality of protocols is used.

### Description:

As mentioned above, the current disclosure relates to integration of IOT devices in industrial automation environments. As mentioned previously, a fundamental challenge in successful integration relates to data communication. While the automation components usually use a small number of mostly proprietary protocols (so-called "brownfield protocols"), IoT devices have a steadily growing number of mostly open protocol standards, and often such protocols are not compatible with each other, therefore reducing communication capabilities between the OT and IOT devices. In order to secure the competitive advantage through the seamless interaction of OT devices with the IoT devices, there is a need for a flexible mechanism which enables communication between the OT and IT devices.

Accordingly, the current disclosure describes a controller configured to communicate with a plurality of industrial IOT devices. The controller comprises two or more plugins configured to communicate with the plurality of industrial IOT devices, and a communication manager for coordinating with the two or more plugins. Each plugin is configured to receive one or more messages from a corresponding industrial IOT device in a corresponding protocol and extract data from the one or more messages by unwrapping the corresponding protocol associated with the one or more messages. The communication manager is configured to obtain the extracted data from the plugins.

Accordingly, the current disclosure describes a controller which utilizes plugins for communicating with the industrial IOT devices. Using the plugin mechanism, new software protocols can also be retrofitted to machines that are already in the field. Additionally, by using plugin modules, modularization is achieved. This allows for increased performance. Furthermore, a development of control applications and communication protocols plugins can be largely decoupled from each other, thereby allowing for improved engineering. Moreover, the plugin mechanism allows a faster integration of new communication protocols into the controller. In this way, it is possible to react more flexibly to new IOT protocols. In addition, the modular plugin mechanism leads to improved security of the system. Detected vulnerabilities can be fixed in the respective plugin without affecting other plugins.

Moreover, via the usage of plugin modules in the controller, the communication of the controller with IoT devices is more direct and transparent compared to the use of gateways. Communication can therefore be handled faster and with lower latency. In addition, it is also less prone to errors, since on the one hand fewer components are involved (which can fail) and on the other hand the structure and semantics of the data are not changed during the communication path.

In an embodiment, the controller further comprises control logic for controlling one or more field devices in the industrial facility.

In an example, the controller further comprises at least one message queue associated with the two or more plugins. The message queue is configured to store the extracted data from the two or more plugins.

In an example, the communication manager is configured to detect a plugin package associated with a new plugin, in the controller and deploy the new plugin in the controller based on the plugin package.

In an example, wherein the request for data is from a first industrial IOT device and wherein the request for data is unwrapped from a first protocol associated with the first industrial IOT device using a first plugin.

In another aspect, the current disclosure describes a method of communicating with a plurality of industrial IOT devices. The method comprises receiving a request for data from a first industrial IOT device, wherein the request for data is in a first protocol associated with the first industrial IOT device; unwrapping the request for data using a first plugin; obtaining the requested data from a control logic based on the unwrapped request for the data; and transmit a response to the first industrial IOT device using the first plugin, wherein the response includes the requested data and the response is wrapped in the first protocol associated with the first industrial IOT device.

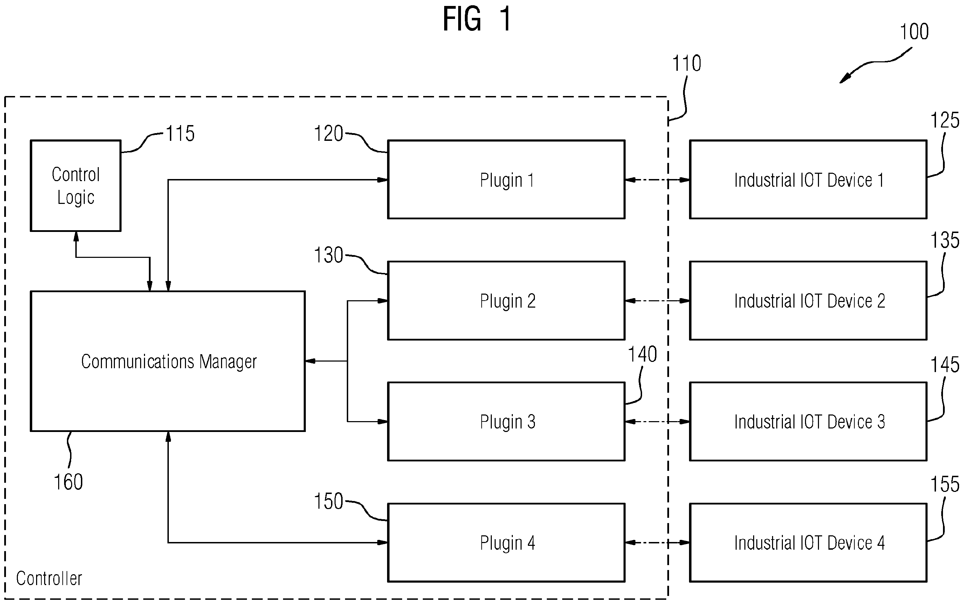

In yet another aspect, the current disclosure describes a non-transitory storage medium comprises a plurality of instructions which when executed on one or more processors cause the one or more processors to receive a request for data from a first industrial IOT device, wherein the request for data is in a first protocol associated with the first industrial IOT device; unwrap the request for data using a first plugin; obtain the requested data from a control logic based on the unwrapped request for the data; and transmit a response to the first industrial IOT device using the first plugin, wherein the response includes the requested data and the response is wrapped in the first protocol associated with the first industrial IOT device. The advantages of the controller are applicable to the method and non-transitory storage medium claims. These are further explained in reference to figures 1-3.
Figure 1 illustrates a controller connected to a plurality of industrial IOT devices in an industrial facility;
Figure 2 illustrates a method of communicating with a plurality of industrial IOT devices in the industrial facility; and
Figure 3 illustrates a controller for communicating with a plurality of industrial IOT devices in the industrial facility.

Figure 1 illustrates a controller 110 connected to a plurality of industrial IOT devices (125, 135, 145, 155), in an industrial facility. Industrial facility herein refers to any environment where one or more industrial processes such as manufacturing, refining, smelting, assembly of equipment, etc., may take place. Examples of industrial facility includes process plants, oil refineries, automobile factories, etc. The industrial facility includes a plurality of industrial devices such as control devices (controller 110, programmable logic controllers, supervisory controllers, operator devices, etc.,), field devices, etc. The control devices are connected directly or via a plurality of peripheral or interface devices, to a plurality of field devices such as actuators and sensor devices for monitoring and controlling industrial processes in the industrial facility. These field devices can include flowmeters, value actuators, temperature sensors, pressure sensors, etc. Based on the process values, the control devices generate control commands for the actuators, for control and regulation of industrial processes in the industrial facility. Accordingly, the controller 110 ineludes control logic 115 for monitoring the process using the data from the sensors and controlling the process using the actuators.

Additionally, the industrial facility includes the plurality of industrial IOT devices (125, 135, 145, 155). The industrial IOT devices may include edge servers, cloud gateways, IOT sensors, etc. Each industrial IOT device is configured to communicate with the controller 110 to transmit and receive data from the controller 110. For example, edge servers and cloud gateways may fetch data from the control logic 115 in the controller 110. Similarly, IOT sensors may transmit data to the control logic 115 in the controller 110. The industrial IOT devices may be configured to communicate with the controller using one or more IT/IOT communication protocols. For example, the IOT industrial devices may communicate via MQTT (message queuing telemetry transport), WAMP (web application messaging protocol), DDS (data distribution service), etc.

In order to be able to communicate with the industrial IOT devices, the controller 110 comprises two or more plugins (shown in the figure 1 as plugins 120, 130, 140, 150) and a communication manager 160. Each plugin is for communicating with one or more corresponding industrial IOT device. Each plugin is capable to communicating with the corresponding industrial IOT device/s using the protocol associated with the corresponding industrial IOT device/s. For example, as shown in figure 1, plugin 120 is connected to industrial IOT device 125 and is accordingly capable of communicating with the industrial IOT device 125 using a protocol associated the industrial IOT device 125. For example, the plugin 1 is capable sending and receiving messages using MQTT protocol. Similarly, the plugin 130 is connected to industrial IOT device 135 and accordingly capable of communicating with the industrial IOT device 135 using a protocol associated the industrial IOT device 135. Similarly, the plugin 140 is connected to the industrial IOT device 145 and accordingly capable of communicating with the industrial IOT device 145 using a protocol associated the industrial IOT device 145. Finally, the plugin 150 is connected to the industrial IOT device 155 accordingly capable of communicating with the industrial IOT device 155 using a protocol associated the industrial IOT device 155.

The plugins are further connected to a communication manager 160 in the controller 110. The communication manager 160 acts as a hub for the plugins and is connected with the various control applications on the controller 110. For example, the communication manager 160 is connected to the control logic 110. The communication manager 160 utilizes the plugins to enable communication between the various control applications in the controller and the various industrial IOT devices. The communication manager forms a uniform interface for all external devices to the data and services of the controller. In an embodiment, the plugins run in the context of the communication manager. In another embodiment, the plugins may run as separate processes in the controller. Although this may result in increased communication latency, as requests have to pass through an additional level, it allows for separation of the individual protocols from each other. This minimizes the mutual influence of the protocols as well as the mutual influence of the associated communication partners (automation components or IoT devices) at runtime.

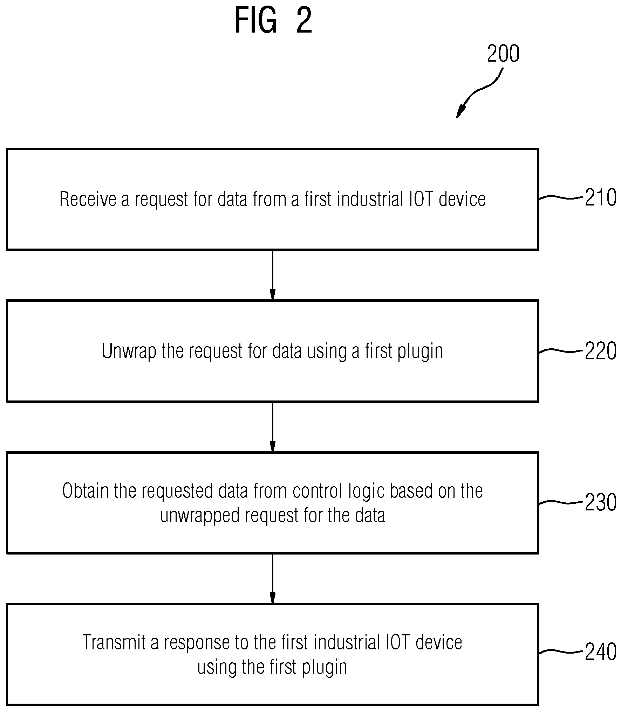

Messages form the various industrial IOT devices are received on the corresponding plugins, which then unwrap the data from the message from the corresponding protocol and then transmit the protocol independent data to the communications manager. The communication manager performs one or more actions on the data. Accordingly, the plugins and the communication manager 160 allow for communication between the controller 110 and the industrial IOT devices over the protocols associated with the corresponding industrial IOT devices. This is further explained in reference to figure 2.

In an example, the controller 110 further comprises one or more message queues associated with the two or more plugins.

For example, each plugin may have a corresponding message queue and upon receiving the messages for the corresponding industrial IOT device, the message is unwrapped and the data from the message is extracted and placed in the corresponding message queue. The communication manager monitors the message queues for new extracted data and accordingly processes the data from the plugins stored on the message queues. Using message queues, the communication manager can prioritize between the protocols.

In an embodiment, the communication manager 160 is configured to detect a plugin package associated with a new plugin, in the controller 110 and deploy the new plugin in the controller 110 based on the plugin package.

Through a plugin loading mechanism in the communication manager 160, the plugins can be loaded at runtime. This is realized, using a special plugin folder in the controller 110. New plugins that are to be loaded on runtime or at startup of the controller, are placed in this folder as plugin packages, which are then detected by the communication manager 160 and started as separate processes. A corresponding plugin candidate package, which is located in this folder, is verified prior to being loaded. By monitoring the special plugin folder, the communication manager 160 detects new plugin packages. As soon as a new plugin package is stored in the folder, the communication manager 160 detects the new plugin package and starts the new plugin automatically after executing verification. In an embodiment, a new plugin may be loaded explicitly by a user.

Figure 2 illustrates a method 200 of communicating with a plurality of industrial IOT devices 125, 135, 145, 155. In an example, the method is realized by the communications manager 160. At step 210, the communication manager 160 receives a request for data from a first industrial IOT device 125. The request for data is in a first protocol associated with the first industrial IOT device 125 and is received via the first plugin.

At step 220, the communication manager 160 unwraps the request for data using a first plugin. As mentioned previously, the first plugin is configured to receive the request for data from the first industrial IOT device 125. Upon receiving the request for data, the first plugin unwraps the request for data from the first protocol associated with the first industrial IOT device 125. The first plugin extracts the request for the data by extracting the payload of the message (comprising the request for data) from the first industrial IOT device by removing the header and other sections which are related to the protocol. The extracted request for data is sent to the communication manager 160.

Then at step 230, the communication manager 160 obtains the requested data from the control logic based on the unwrapped request for the data. The request for data specifies the data sought from the controller 110. Accordingly, the communication manager 160 queries the appropriate control application for the data and receives the data from the corresponding control application.

Then at step 240, the communication manager 160 transmits a response to the first industrial IOT device 125 using the first plugin. The response includes the requested data and the response is wrapped in the first protocol associated with the first industrial IOT device 125.

Accordingly, the current disclosure describes a method and device for enabling communication between the controller and the industrial IOT device using plugins. The plugins allow for flexible deployment of protocol communication. Additionally, the plugins allow for prioritization of protocols or industrial IOT devices by the communication manager. Accordingly, automation components (such as the controller) and IoT devices can be connected via the protocol plugins. Incoming communications are received by the plugins and converted into protocol-independent communications. These are then forwarded via to the communication manager, which can then process them.

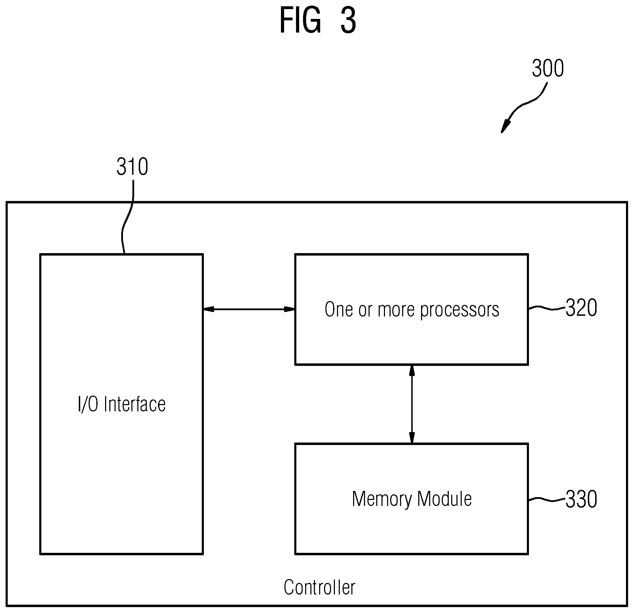

It may be noted that while the above mentioned method is explained in reference to the communication manager 160, the above method may be realized using one or more devices or via one or more software modules. Accordingly, the current disclosure describes a control device 300 which is further described in relation to figure 3.

Accordingly, the current disclosure describes a control device 300 for communicating with a plurality of industrial IOT devices. The control device 300 comprises a I/O interface 310 for communicating with the plurality of industrial IOT devices; and one or more processors 320 connected to a memory module 330. The memory module 330 (also referred to as non-transitory storage medium 330) includes a plurality of instructions which when executed on the one or more processors 320, cause the one or more processors 320 to receive a request for data from a first industrial IOT device, wherein the request for data is in a first protocol associated with the first industrial IOT device; unwrap the request for data using a first plugin; obtain the requested data from a control logic based on the unwrapped request for the data; and transmit a response to the first industrial IOT device (125) using the first plugin, wherein the response includes the requested data and the response is wrapped in the first protocol associated with the first industrial IOT device (125).

For the purpose of this description, a computer-usable or computer-readable non-transitory storage medium can be any apparatus that can contain, store, communicate, propagate, or transport the program for use by or in connection with the instruction execution system, apparatus, or device. The medium can be electronic, magnetic, optical, electromagnetic, infrared, or semiconductor system (or apparatus or device) or a propagation mediums in and of themselves as signal carriers are not included in the definition of physical computer-readable medium include a semiconductor or solid state memory, magnetic tape, a removable computer diskette, random access memory (RAM), a read only memory (ROM), a rigid magnetic disk and optical disk such as compact disk read-only memory (CD-ROM), compact disk read/write, and DVD. Both processing units and program code for implementing each aspect of the technology can be centralized or distributed (or a combination thereof) as known to those skilled in the art.

While the current disclosure is described with references to few industrial devices, a plurality of industrial devices may be utilized in the context of the current disclosure. While the present disclosure has been described in detail with reference to certain embodiments, it should be appreciated that the present disclosure is not limited to those embodiments.

In view of the present disclosure, many modifications and variations would be present themselves, to those skilled in the art without departing from the scope of the various embodiments of the present disclosure, as described herein. The scope of the present disclosure is, therefore, indicated by the following claims rather than by the foregoing description. All changes, modifications, and variations coming within the meaning and range of equivalency of the claims are to be considered within their scope. All advantageous embodiments claimed in method claims may also be apply to device/non-transitory storage medium claims.

## Claims

1. A controller (110) for communicating with a plurality of industrial IOT devices (125, 135, 145, 155), the controller (110) comprising:
a. two or more plugins (120, 130, 140, 150) configured to communicate with the plurality of industrial IOT devices (125, 135, 145, 155), wherein each plugin is configured to receive one or more messages from a corresponding industrial IOT device in a corresponding protocol and extract data from the one or more messages; and
b. a communication manager (160) for coordinating with the two or more plugins (120, 130, 140, 150), wherein the communication manager (160) is configured to obtain the extracted data from the plugins (120, 130, 140, 150);
wherein each plugin is configured to extract data from the one or more messages by unwrapping the corresponding protocol associated with the one or more messages.

2. The controller (110) as claimed in claim 1, wherein the controller (110) further comprises control logic (115) for controlling one or more field devices in the industrial facility.

3. The controller (110) as claimed in claim 1, wherein the controller (110) further comprises at least one message queue associated with the two or more plugins (120, 130, 140, 150), wherein the message queue is configured to store the extracted data from the two or more plugins (120, 130, 140, 150).

4. The controller (110) as claimed in claim 1, wherein the communication manager (160) is configured to detect a plugin package associated with a new plugin, in the controller (110) and deploy the new plugin in the controller (110) based on the plugin package.

5. The controller (110) as claimed in claim 2, wherein the request for data is from a first industrial IOT device and wherein the request for data is unwrapped from a first protocol associated with the first industrial IOT device using a first plugin.

6. A method (200) of communicating with a plurality of industrial IOT devices (125, 135, 145, 155), the method (200) comprising:
a. receiving (210) a request for data from a first industrial IOT device (125), wherein the request for data is in a first protocol associated with the first industrial IOT device (125);
b. unwrapping (220) the request for data using a first plugin, wherein unwrapping the request for data comprises unwrapping the request for data from the first protocol;
c. obtaining (230) the requested data from a control logic based on the unwrapped request for the data; and
d. transmitting (240) a response to the first industrial IOT device (125) using the first plugin, wherein the response includes the requested data and the response is wrapped in the first protocol associated with the first industrial IOT device (125) .

7. A non-transitory storage medium (330) comprising a plurality of instructions which when executed on one or more processors (320), cause the one or more processors (320) to:
a. receive a request for data from a first industrial IOT device (125), wherein the request for data is in a first protocol associated with the first industrial IOT device (125);
b. unwrap the request for data using a first plugin;
c. obtain the requested data from a control logic based on the unwrapped request for the data; and
d. transmit a response to the first industrial IOT device (125) using the first plugin, wherein the response includes the requested data and the response is wrapped in the first protocol associated with the first industrial IOT device (125).
